# FASCICULE DE BREVET EUROPEEN

(11) **EP 2 900 450 B1**
(45) Date de publication et mention de la délivrance du brevet: **27.07.2016**
(21) Numéro de dépôt: 13766026.2
(22) Date de dépôt: 20.09.2013
(51) Int. Cl.: B29C 45/34, B29C 45/43

(54) **DISPOSITIF ET PROCÉDÉ DE MOULAGE PAR INJECTION VENTILÉ**
VORRICHTUNG UND VERFAHREN ZUM SPRITZGIESSEN MIT ENTFLÜFTUNG
APPARATUS AND METHOD OF VENTED INJECTION MOLDING

(30) Priorité: 26.09.2012 FR 1259019
(43) Date de publication de la demande: 05.08.2015
(73) Titulaire: Valeo Vision, 93012 Bobigny Cedex (FR)
(72) Inventeur: BOURGAUT, Patrice, F-72200 La Fleche (FR)
(86) Numéro de dépôt international: PCT/EP2013/069557
(87) Numéro de publication internationale: WO 2014/048846

(56) Documents cités:
- WO-A1-2005/021232
- DE-A1-102010 043 045
- GB-A- 954 867
- GB-A- 1 253 539
- JP-A- 2003 170 479
- US-A1- 2008 054 510

## Description

La présente invention concerne le domaine du moulage par injection d'un élément en plastique, notamment d'un masque, d'un réflecteur ou d'un boîtier pour projecteur de véhicule automobile.

Lors de l'injection de matière plastique dans une cavité de moulage d'un dispositif de moulage d'un élément en plastique, il y a généralement création de gaz provenant de la matière plastique chaude injectée. Dans ce qui suit, on appelle gaz aussi bien un gaz pur qu'un mélange de gaz divers. Il est donc souhaitable d'évacuer ce gaz car il y a un risque de former des poches de gaz dans la cavité qui ne seront pas remplies par la matière plastique. En outre, ce gaz peut se condenser dans la cavité de moulage sous forme de dépôts solides qui engendrent des soufflures dans l'élément en plastique.

On connaît de l'état de la technique, des dispositifs de moulage comportant des évents raccordés à la cavité de moulage. Toutefois, la matière plastique injectée dans le dispositif peut s'introduire dans ces évents et former des défauts sur l'élément en plastique moulé. Ces dispositifs nécessitent également des nettoyages fréquents de la cavité de moulage et des évents.

On connaît également du document US2004/022885 un dispositif de moulage comportant des moyens de dégazage de la cavité de moulage comportant des moyens d'évacuation de gaz formés par un éjecteur creux comprenant une valve. La valve est rappelée en configuration ouverte des moyens d'évacuation par un ressort. Dans cette configuration, la valve forme une saillie dans la cavité de moulage. La valve est poussée en configuration fermée par la matière plastique injectée dans la cavité.

Il peut toutefois se former des dépôts sur la valve qui empêchent son fonctionnement correct. En effet, ces dépôts peuvent gêner le déplacement de la valve entre ses configurations ouverte et fermée. La force nécessaire pour fermer la valve peut alors être supérieure à la force exercée sur la valve par la matière plastique injectée dans la cavité, de sorte que la valve ne se ferme pas bien. Il y a donc un risque d'infiltration de matière plastique dans les moyens d'évacuation de gaz et/ou formation d'un défaut sur l'élément en plastique après moulage. Ces défauts ne sont en général pas acceptables et l'élément doit être mis au rebut.

L'invention a pour but de proposer un dispositif de moulage d'un élément en matière plastique permettant de réaliser une évacuation efficace du gaz formé dans la cavité de moulage.

A cet effet, l'invention a pour objet un dispositif de moulage comprenant une cavité de moulage d'un élément en matière plastique, des moyens d'injection de matière plastique dans la cavité et des moyens d'évacuation de gaz contenu dans la cavité, les moyens d'évacuation de gaz comportant un canal d'évacuation débouchant dans la cavité et des moyens de fermeture du canal pouvant prendre alternativement une configuration d'ouverture du canal et une configuration de fermeture du canal, les moyens de fermeture du canal délimitant, au moins partiellement, la cavité de moulage lorsqu'ils sont en configuration de fermeture du canal, caractérisé en ce qu'il comprend des moyens de pilotage des moyens de fermeture du canal en fonction de la progression de matière dans la cavité, ces moyens de pilotage permettant de mettre les moyens de fermeture du canal dans leur configuration de fermeture du canal avant d'être en contact avec la matière plastique.

Grâce aux moyens de pilotage des moyens de fermeture du canal, la fermeture du canal d'évacuation n'est pas réalisée par la force exercée par la matière plastique sur les moyens de fermeture du canal. On contrôle donc avec précision le déplacement des moyens de fermeture et le moment où les moyens passent de la configuration ouverte à la configuration fermée. En particulier, on assure ainsi que ces moyens de fermeture sont en configuration de fermeture du canal avant d'être en contact avec la matière plastique. Il n'y a donc pas de risque de blocage des moyens de fermeture du canal par infiltration de matière plastique dans le canal d'évacuation. On réduit aussi le risque de formation de défauts dus à une fermeture incomplète du canal.

Il n'est également pas nécessaire d'utiliser des pressions d'injection élevées comme le requiert par contre un dispositif de moulage de l'état de la technique dans lequel il faut s'assurer que la valve est bien en configuration fermée. Ces pressions élevées rendent souvent difficile l'éjection de l'élément en plastique hors du dispositif.

Un autre avantage apporté par le pilotage des moyens de fermeture est qu'il n'est pas nécessaire de limiter la dimension de la section du canal d'évacuation débouchant dans la cavité si bien que l'on peut améliorer l'évacuation de gaz.

De plus, le risque de formation de dépôts solides indésirables dans la cavité de moulage est réduit. En effet, il est possible de positionner le canal d'évacuation de gaz dans une zone de la cavité de moulage dans laquelle le gaz a tendance à s'accumuler et/ou dans laquelle les dépôts solides se forment préférentiellement. De ce fait, les opérations de nettoyage du dispositif sont moins fréquentes, ce qui permet de réduire les défauts des pièces moulées générés lors du redémarrage du dispositif et ainsi d'augmenter le rendement du dispositif.

On comprend que les moyens de fermeture sont maintenus en configuration d'ouverture du canal le plus longtemps possible et ne sont mis en configuration de fermeture que lorsque la matière plastique arrive à proximité du canal d'évacuation.

Les moyens de pilotage des moyens de fermeture du canal d'évacuation peuvent avantageusement être compris dans les moyens de pilotage de l'injection séquentielle de matière plastique dans la cavité de moulage.

On notera que ce dispositif est bien adapté à l'injection des matériaux plastiques tels que les thermoplastiques et les thermodurcissables, comme par exemple les polyester, tel que le polybutylène téréphthalate (PBTP), les polyamides et les polycarbonates.

Le dispositif de moulage peut en outre comporter l'une ou plusieurs des caractéristiques suivantes, prises seules ou en combinaison :
- Les moyens d'évacuation de gaz comportent des moyens de pompage de gaz contenu dans la cavité, les moyens de pompage étant reliés au canal d'évacuation. Ces moyens de pompage permettent de réduire le risque de formation de dépôts solides dans la cavité puisque le gaz pouvant se déposer est évacué de manière plus efficace hors de la cavité par pompage. De plus, comme le pompage peut être réalisé pendant la majeure partie de la phase d'injection de matière plastique dans le moule, il n'est pas nécessaire de prévoir dans le dispositif des joints étanches aux gaz.
- Le dispositif comporte des moyens d'introduction de gaz dans la cavité, les moyens d'introduction étant reliés au canal d'évacuation. Il est donc possible d'injecter un gaz dans la cavité de moulage. Cela est particulièrement avantageux lorsqu'il se produit un retrait de la matière plastique dans la cavité de moule lors du refroidissement. En effet, lors du retrait de la matière plastique, il peut y avoir des zones de la cavité dans lesquelles il se crée une pression négative si bien que l'éjection hors du dispositif de l'élément en plastique après refroidissement est difficile. L'injection de gaz dans ces zones permet de résoudre le problème en évitant que l'élément en plastique n'adhère aux parois de la cavité de moulage. On comprend que pour pouvoir introduire le gaz dans la cavité de moulage lorsque la matière plastique a été injectée, il est avantageux que les moyens de fermeture du canal d'évacuation puissent prendre leur configuration d'ouverture du canal sans pénétrer dans la cavité de moulage.
- Les moyens d'introduction de gaz forment également des moyens d'éjection de l'élément en matière plastique, par effet de chasse. Cela permet de minimiser la formation d'empreintes laissées sur l'élément moulé par des éjecteurs mécaniques.
- Les moyens de fermeture du canal comprennent une aiguille comportant une extrémité libre délimitant, au moins partiellement, la cavité de moulage lorsque les moyens de fermeture sont en configuration de fermeture du canal, l'extrémité libre étant destinée à obturer un orifice communiquant d'une part avec la cavité et d'autre part avec le canal d'évacuation. L'aiguille a une forme de tige de vérin fluidique coulissant dans un logement du dispositif, de forme sensiblement complémentaire à l'aiguille. L'aiguille est déplaçable en translation entre une configuration de fermeture du canal, dans laquelle elle obture l'orifice et une configuration d'ouverture du canal, dans laquelle l'extrémité libre de l'aiguille est à l'intérieur du logement.
- Le dispositif comporte deux parties, respectivement fixe et mobile, déplaçables l'une par rapport à l'autre entre une position ouverte et une position fermée du dispositif de moulage, la partie mobile comprenant les moyens d'évacuation de gaz. Ainsi, les traces éventuelles pouvant être laissées par les moyens d'évacuation de gaz sur l'élément moulé ne sont généralement pas localisées sur la face visible de cet élément. L'aspect de l'élément moulé est donc amélioré.
- Le dispositif comporte plusieurs canaux d'évacuation destinés à se fermer indépendamment l'un de l'autre, en fonction de la progression de la matière plastique dans la cavité. On peut donc avantageusement maintenir ouvert les canaux d'évacuation qui sont en aval du front de matière plastique dans la cavité. On comprend qu'au fur et à mesure que la matière plastique progresse dans la cavité, on met les moyens de fermeture des canaux, indépendamment les uns des autres, dans leurs configuration de fermeture avant d'être en contact avec la matière plastique et on laisse en configuration d'ouverture des canaux, les moyens de fermeture qui sont encore relativement éloignés de la matière plastique. Cela permet de continuer d'évacuer le gaz par les canaux qui sont encore en configuration d'ouverture et ainsi d'optimiser l'évacuation de gaz.

L'invention a également pour objet un procédé de fabrication d'un élément en plastique par moulage par injection dans un dispositif de moulage tel que défini précédemment, **caractérisé en ce qu**'il comprend les étapes suivantes :
- on ferme le dispositif ;
- on injecte de la matière plastique dans la cavité de moulage ;
- on pompe le gaz contenu dans la cavité par plusieurs canaux d'évacuation de gaz débouchant dans la cavité ;
- on ferme chaque canal d'évacuation de gaz, indépendamment des autres canaux, avant le passage de la matière plastique devant chaque canal d'évacuation.

Le procédé peut également comporter, le dispositif étant fermé, les étapes suivantes :
- une fois l'injection de matière plastique dans la cavité terminée, on ouvre au moins un canal d'évacuation de gaz et
- on introduit un gaz dans la cavité par chaque canal d'évacuation de gaz ouvert.

Le procédé peut comporter en outre les étapes suivantes :
- on ouvre le dispositif ;
- si les canaux d'évacuation de gaz ne sont pas déjà ouverts, on ouvre les canaux et
- on introduit un gaz sous pression dans les canaux de sorte que l'élément en plastique est éjecté.

L'invention sera mieux comprise à la lecture de la description qui va suivre, donnée uniquement à titre d'exemple et faite en se référant aux dessins dans lesquels :
- la figure 1 est une vue en coupe d'un dispositif de moulage selon l'invention ;
- la figure 2 est un agrandissement de la figure 1 dans lequel les moyens d'évacuation sont en configuration d'ouverture du canal ;
- la figure 3 est un agrandissement de la figure 1 dans lequel les moyens d'évacuation sont en configuration de fermeture du canal.

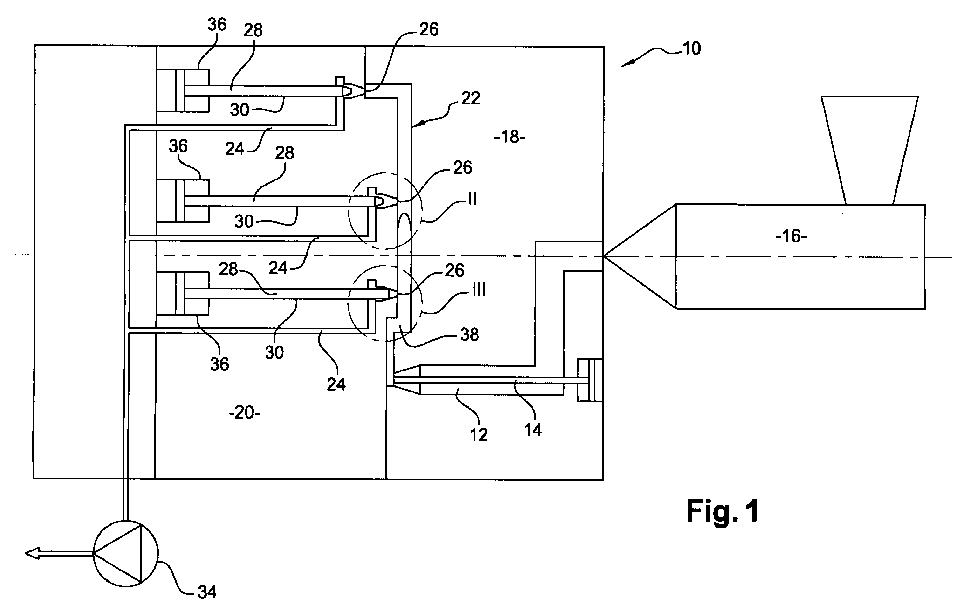

On a représenté sur la figure 1 un dispositif 10 de moulage par injection d'un élément en plastique. Cet élément en plastique peut par exemple être un masque, un réflecteur ou un boîtier pour projecteur de véhicule automobile.

Outre le dispositif 10, on a également représenté sur la figure 1 une busette 12 d'injection de matière plastique comportant une aiguille 14 de fermeture de la busette 12. Cette busette 12 est reliée à une unité d'injection 16 de matière plastique d'un type connu.

Le dispositif de moulage 10 comprend une partie fixe 18 et une partie mobile 20 déplaçables l'une par rapport à l'autre entre une position ouverte et une position fermée du dispositif de moulage 10. Lorsque le dispositif 10 est en position fermée, les parties 18, 20 forment une cavité 22 de moulage d'un élément en plastique.

La partie mobile 20 comprend des moyens d'évacuation de gaz. Dans cet exemple, les moyens d'évacuation de gaz comprennent trois canaux 24 d'évacuation débouchant chacun, par un orifice 26, dans la cavité de moulage 22. Chaque canal 24 est muni de moyens de fermeture de ce canal. Les canaux 24 d'évacuation de gaz sont reliés à une pompe 34.

Les moyens de fermeture de chaque canal comprennent une aiguille 28 de forme générale cylindrique qui se déplace en translation dans un logement 30 de forme sensiblement complémentaire à l'aiguille 28. L'aiguille 28 est déplaçable en translation entre une configuration de fermeture du canal, dans laquelle elle obture l'orifice 26, et une configuration d'ouverture du canal, dans laquelle l'extrémité libre 32 de l'aiguille 28 est à l'intérieur du logement 30. L'aiguille 28 a une forme de tige de vérin fluidique. L'aiguille 28 peut être pilotée hydrauliquement par des moyens de pilotage 36 représentés très schématiquement sur la figure 1.

Le dispositif 10 est représenté lors de l'injection de matière plastique dans la cavité 22. On a représenté la matière plastique 38 en progression dans la cavité 22. On voit que les moyens d'évacuation en contact avec la matière plastique 38 sont en configuration de fermeture du canal 24 alors que les moyens d'évacuation qui ne sont pas encore en contact avec la matière plastique sont en configuration d'ouverture du canal 24.

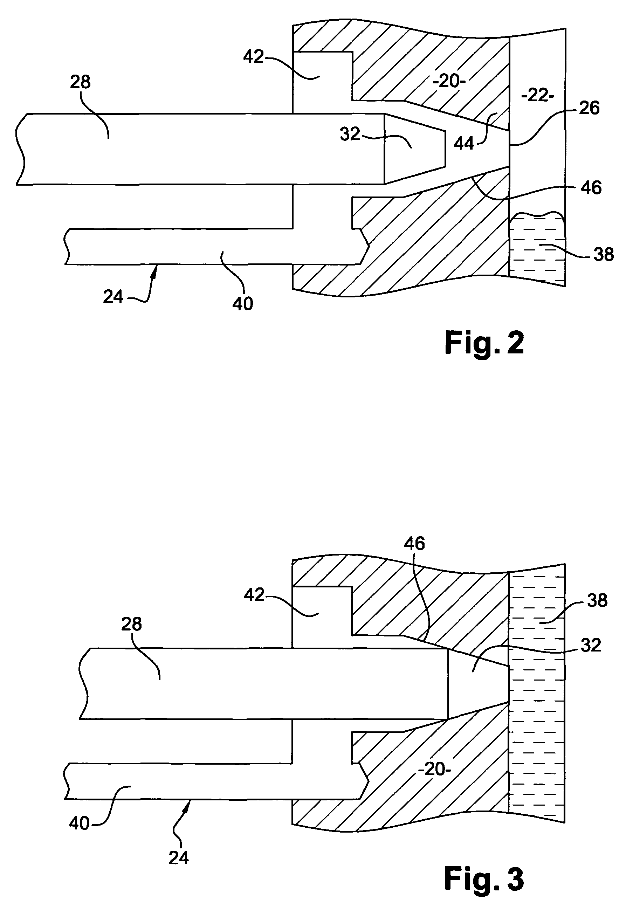

On a représenté sur la figure 2 un agrandissement du dispositif 10 et plus particulièrement, les moyens d'évacuation de gaz en configuration d'ouverture du canal 24 d'évacuation de gaz.

L'aiguille 28 a une forme générale cylindrique et comprend une extrémité libre 32 de forme générale tronconique convergeant vers la cavité 22 de moulage.

Le canal 24 comprend, dans cet exemple, une partie 40 de forme sensiblement cylindrique débouchant dans une première chambre 42 de forme générale cylindrique. Cette première chambre 42 communique avec une deuxième chambre 44 qui comporte une extrémité 46 de forme générale tronconique. Cette extrémité tronconique converge vers la cavité 22 de moulage. La forme de l'extrémité 46 de la deuxième chambre 44 et la forme de l'extrémité libre 32 de l'aiguille 28 sont complémentaires. Le canal 24 débouche dans la cavité 22 par l'orifice 26.

Sur la figure 2, on voit que la matière plastique 38 approche de l'orifice 26 et que les moyens d'évacuation de gaz sont en configuration d'ouverture du canal 24. Dans cette configuration, le gaz présent dans la cavité 22 peut être évacué hors de la cavité 22 par le canal 24.

Sur la figure 3, on a représenté les moyens d'évacuation de gaz en configuration de fermeture du canal 24. L'extrémité libre 32 de l'aiguille 28 et l'extrémité 46 de la deuxième chambre 44 du canal 24 coopèrent, si bien que l'orifice 26 est obturé et que l'extrémité libre 32 de l'aiguille 28 délimite un partie de la cavité 22 de moulage. Lorsque la matière plastique 38 passe devant l'orifice 26, ce dernier est en configuration de fermeture du canal 24.

Les formes tronconiques complémentaires de l'extrémité libre 32 de l'aiguille 28 et de l'extrémité 46 de la deuxième chambre 44 du canal 24 permettent d'assurer une bonne fermeture de l'orifice 26.

En outre, les aiguilles 28 étant pilotées hydrauliquement, la force exercée sur chacune d'elle peut être adaptée en fonction de leur encrassement afin de s'assurer de leur bonne fermeture.

On constate également que l'aiguille 28, se déplaçant dans le logement 30, ne forme pas de saillie dans la cavité 22 de moulage. Les risques de condensation de gaz formé au cours de l'injection sur l'aiguille 28 sont ainsi diminués.

Le dispositif 10 peut également comporter des moyens d'introduction de gaz dans la cavité 22. Dans le cas présent, les moyens d'introduction de gaz sont formés par la pompe 34 reliée aux canaux d'évacuation 24. Cette pompe 34 peut fonctionner dans les deux sens : elle peut pomper le gaz présent dans la cavité 22 ou injecter un gaz dans la cavité 22.

On peut bien entendu envisager de relier deux pompes aux canaux 24, la première permettant de pomper le gaz présent dans la cavité 22 et la deuxième permettant d'introduire un gaz dans la cavité 22.

On comprend que ce dispositif 10 nécessite moins d'entretien qu'un dispositif de l'état de la technique. En effet, comme la formation de dépôts par condensation de gaz contenu dans la cavité de moulage 22 est réduite, il est possible d'espacer dans le temps les arrêts du dispositif de moulage 10 pour réaliser les opérations de nettoyage du dispositif 10.

On décrira ci-dessous les principales étapes d'un procédé selon l'invention pour le moulage d'un élément en plastique au moyen du dispositif de moulage 10.

Tout d'abord, on déplace les parties fixe 18 et mobile 20 du dispositif de la position ouverte à la position fermée du dispositif 10.

Puis, on vérifie que les moyens d'évacuation sont en configuration d'ouverture des canaux 24, on injecte la matière plastique 38 et on pompe le gaz contenu dans la cavité 22 par les canaux 24.

Au fur et à mesure de la progression du front de matière plastique 38 dans la cavité 22, on positionne chaque aguille 28 en configuration de fermeture du canal 24 correspondant, de sorte que lorsque la matière plastique 38 passe devant chaque orifice 26, ces orifices 26 sont fermés.

Comme les orifices 26 sont fermés au fur et à mesure de la progression de la matière plastique, l'évacuation de gaz peut toujours être réalisée par les canaux 24 qui n'ont pas encore été atteints par la matière plastique 38. Cela permet un meilleur dégazage de la cavité 22 de moulage.

Avantageusement, les moyens de pilotages 36 des moyens de fermeture, c'est-à-dire dans cet exemple des aiguilles 28, peuvent être compris dans les moyens de pilotage de l'injection séquentielle de matière plastique 38 dans la cavité de moulage.

Une fois tous les orifices 26 fermés et la cavité 22 remplie de matière plastique 38, l'élément en plastique est laissé à refroidir dans le dispositif 10. Il se produit généralement un retrait de la matière plastique 38 qui, s'il y a adhérence de la matière plastique 38 aux parois de la cavité 22, peut provoquer des défauts dans l'élément moulé.

Afin d'éviter ces adhérences, on peut ouvrir au moins un canal 24 d'évacuation de gaz, c'est-à-dire que l'on peut ouvrir sélectivement les canaux 24 d'évacuation de gaz situés à proximité des zones de la cavité 22 dans lesquelles ces adhérences sont localisées. Ensuite, on introduit, par chaque canal 24 ouvert, un gaz dans la cavité 22 au moyen de la pompe 34.

Une fois l'élément en plastique suffisamment refroidi, on ouvre le dispositif en déplaçant les parties fixe 18 et mobile 20 l'une par rapport à l'autre, puis on ouvre les canaux 24 qui sont en configuration de fermeture et ensuite on introduit un gaz sous pression dans les canaux 24 de sorte que l'élément en plastique est éjecté par effet de chasse.

## Revendications

1. Dispositif de moulage (10) comprenant :
- une cavité de moulage (22) d'un élément en matière plastique,
- des moyens d'injection (16) de matière plastique (38) dans la cavité (22) et
- des moyens (24, 28) d'évacuation de gaz contenu dans la cavité (22),
les moyens d'évacuation de gaz (24, 28) comportant
- un canal d'évacuation (24) débouchant dans la cavité et
- des moyens de fermeture (28) du canal (24) pouvant prendre alternativement une configuration d'ouverture du canal et une configuration de fermeture du canal,
- les moyens de fermeture (28) du canal (24) délimitant, au moins partiellement, la cavité de moulage (22) lorsqu'ils sont en configuration de fermeture du canal,
- comprenant des moyens (36) de pilotage des moyens de fermeture (28) du canal (24) en fonction de la progression de matière dans la cavité (22),
- ces moyens de pilotage (36) permettant de mettre les moyens de fermeture (28) du canal (24) dans leur configuration de fermeture du canal avant d'être en contact avec la matière plastique (38),
**caractérisé en ce qu'**il comporte des moyens d'introduction de gaz (34) dans la cavité (22), les moyens d'introduction (34) étant reliés au canal d'évacuation (24), comportant plusieurs canaux d'évacuation (24) destinés à se fermer indépendamment l'un de l'autre, en fonction de la progression de la matière plastique (38) dans la cavité (22)..

2. Dispositif de moulage (10) selon la revendication précédente, dans lequel les moyens d'évacuation de gaz (24, 28) comportent des moyens de pompage (34) de gaz contenu dans la cavité (22), les moyens de pompage (34) étant reliés au canal d'évacuation (24).

3. Dispositif de moulage (10) selon la revendication précédente, dans lequel les moyens d'introduction de gaz (34) forment également des moyens d'éjection de l'élément en matière plastique, par effet de chasse.

4. Dispositif de moulage (10) selon l'une quelconque des revendications précédentes, dans lequel les moyens de fermeture (28) du canal (24) comprennent une aiguille (28) comportant une extrémité libre (32) délimitant, au moins partiellement, la cavité de moulage (22) lorsque les moyens de fermeture (28) sont en configuration de fermeture du canal, l'extrémité libre (32) étant destinée à obturer un orifice (26) communiquant d'une part avec la cavité (22) et d'autre part avec le canal d'évacuation (24).

5. Dispositif de moulage (10) selon l'une quelconque des revendications précédentes, comportant deux parties, respectivement fixe (18) et mobile (20), déplaçables l'une par rapport à l'autre entre une position ouverte et une position fermée du dispositif de moulage (10), la partie mobile (20) comprenant les moyens d'évacuation de gaz (24, 28).

6. Procédé de fabrication d'un élément en plastique par moulage par injection dans un dispositif de moulage (10) selon la revendication 5, **caractérisé en ce qu**'il comprend les étapes suivantes :
- on ferme le dispositif (10) ;
- on injecte de la matière plastique (38) dans la cavité de moulage (22) ;
- on pompe le gaz contenu dans la cavité (22) par plusieurs canaux d'évacuation de gaz (24) débouchant dans la cavité (22) ;
- on ferme chaque canal d'évacuation de gaz (24), indépendamment des autres canaux, avant le passage de la matière plastique (38) devant chaque canal d'évacuation (24).

7. Procédé selon la revendication précédente, comportant, le dispositif étant fermé, les étapes suivantes :
- une fois l'injection de matière plastique (38) dans la cavité (22) terminée, on ouvre au moins un canal d'évacuation de gaz (24) et
- on introduit un gaz dans la cavité (22) par chaque canal d'évacuation de gaz (24) ouvert.

8. Procédé selon la revendication 6 ou 7, comportant en outre les étapes suivantes :
- on ouvre le dispositif (10) ;
- si les canaux d'évacuation de gaz (24) ne sont pas déjà ouverts, on ouvre les canaux (24) et
- on introduit un gaz sous pression dans les canaux (24) de sorte que l'élément en plastique est éjecté.

## Patentansprüche

1. Gießvorrichtung (10), aufweisend:
- eine Kavität (22) zum Formen eines Kunststoffbauteils,
- Mittel (16) zum Einspritzen von Kunststoff (38) in die Kavität (22) und
- Mittel (24, 28) zum Ableiten von in der Kavität (22) befindlichem Gas,
wobei die Gasableitmittel (24, 28) umfassen:
- einen in die Kavität mündenden Ableitkanal (24) und
- Mittel (28) zum Schließen des Kanals (24), die abwechselnd eine Stellung zum Öffnen des Kanals und eine Stellung zum Schließen des Kanals einnehmen können,
- wobei die Mittel (28) zum Schließen des Kanals (24) die Formkavität (22) wenigstens teilweise begrenzen, wenn diese sich in der Stellung zum Schließen des Kanals befinden,
- wobei sie Mittel (36) zum Steuern der Mittel (28) zum Schließen des Kanals (24) in Abhängigkeit des Vordringens des Kunststoffs in der Kavität (22) umfasst,
- wobei diese Steuermittel (36) es erlauben, die Mittel (28) zum Schließen des Kanals (24) in ihre Stellung zum Schließen des Kanals zu bringen, bevor sie mit dem Kunststoff (38) in Kontakt gelangen,
**dadurch gekennzeichnet, dass** sie Mittel (34) zum Einleiten von Gas in die Kavität (22) umfasst, wobei die Einleitmittel (34) mit dem Ableitkanal (24) verbunden sind, wobei sie mehrere Ableitkanäle (24) umfasst, die dazu bestimmt sind, in Abhängigkeit des Vordringens des Kunststoffs (38) in der Kavität (22) getrennt voneinander geschlossen zu werden.

2. Gießvorrichtung (10) nach dem vorhergehenden Anspruch,
bei der die Gasableitmittel (24, 28) Mittel (34) zum Auspumpen von in der Kavität (22) befindlichem Gas umfassen, wobei die Auspumpmittel (34) mit dem Ableitkanal (24) verbunden sind.

3. Gießvorrichtung (10) nach dem vorhergehenden Anspruch,
bei der die Mittel (34) zum Einleiten des Gases auch Mittel zum Auswerfen des Kunststoffteils durch einen Ausstoßeffekt bilden.

4. Gießvorrichtung (10) nach einem der vorhergehenden Ansprüche,
bei der die Mittel (28) zum Schließen des Kanals (24) eine Nadel (28) mit einem freien Ende (32) umfassen, das die Formkavität (22) wenigstens teilweise begrenzt, wenn die Schließmittel (28) sich in der Stellung zum Schließen des Kanals befinden, wobei das freie Ende (32) dazu bestimmt ist, eine Öffnung (26) zu verschließen, die einerseits mit der Kavität (22) und andererseits mit dem Ableitkanal (24) kommuniziert.

5. Gießvorrichtung (10) nach einem der vorhergehenden Ansprüche,
mit zwei Teilen, einem feststehenden (18) bzw. einem beweglichen (20), die bezüglich einander zwischen einer geöffneten Stellung und einer geschlossenen Stellung der Gießvorrichtung (10) verschiebbar sind, wobei das bewegliche Teil (20) die Gasableitmittel (24, 28) umfasst.

6. Verfahren zum Herstellen eines Kunststoffbauteils durch Spritzgießen in eine Gießvorrichtung (10) nach Anspruch 5,
**dadurch gekennzeichnet, dass** es die folgenden Schritte umfasst:
- Schließen der Vorrichtung (10);
- Einspritzen des Kunststoffs (38) in die Formkavität (22);
- Auspumpen des in der Kavität (22) befindlichen Gases über mehrere in die Kavität (22) mündende Kanäle (24) zum Ableiten des Gases;
- Schließen eines jeden Gasableitkanals (24) getrennt von den anderen Kanälen, bevor der Kunststoff (38) vor jeden Ableitkanal (24) gelangt.

7. Verfahren nach dem vorhergehenden Anspruch, das bei geschlossener Vorrichtung die folgenden Schritte umfasst:
- Öffnen wenigstens eines Gasableitkanals (24), nachdem das Einspritzen des Kunststoffs (38) in die Kavität (22) beendet ist, und
- Einleiten eines Gases in die Kavität (22) über jeden offenen Gasableitkanal (24).

8. Verfahren nach Anspruch 6 oder 7, das ferner die folgenden Schritte umfasst:
- Öffnen der Vorrichtung (10);
- Öffnen der Gasableitkanäle (24), sofern die Kanäle (24) nicht bereits geöffnet sind, und
- Einleiten eines Gases unter Druck in die Kanäle (24), derart, dass das Kunststoffbauteil ausgeworfen wird.

## Claims

1. Moulding device (10) comprising
- a cavity (22) for moulding an element made of plastic material;
- means (16) for injection of plastic material (38) into the cavity (22); and
- means (24, 28) for discharge of gas contained in the cavity (22),
the means (24, 28) for discharge of gas comprising:
- a discharge channel (24) which opens into the cavity; and
- means (28) for closure of the channel (24) which can adopt alternatively a configuration of opening of the channel and a configuration of closure of the channel;
- the means (28) for closure of the channel (24) delimiting the moulding cavity (22) at least partially when they are in the configuration of closure of the channel;
- comprising means (36) for controlling the means (28) for closure of the channel (24) according to the progression of material in the cavity (22);
- these control means (36) making it possible to put the means (28) for closure of the channel (24) into their configuration of closure of the channel before being in contact with the plastic material (38),
**characterised in that** it comprises means (34) for introduction of gas into the cavity (22), the means (34) for introduction being connected to the discharge channel (24) comprising a plurality of discharge channels (24) which are designed to be closed independently from one another, according to the progression of the plastic material (38) in the cavity (22).

2. Moulding device (10) according to the preceding claim, wherein the means (24, 28) for discharge of gas comprise means (34) for pumping of gas contained in the cavity (22), the pumping means (34) being connected to the discharge channel (24).

3. Moulding device (10) according to the preceding claim, wherein the means (34) for introduction of gas also form means for ejection of the element made of plastic material, by a driving effect.

4. Moulding device (10) according to any one of the preceding claims, wherein the means (28) for closure of the channel (24) comprise a needle (28) comprising a free end (32), which delimits the moulding cavity (22) at least partially when the means (28) for closure are in the configuration of closure of the channel, the free end (32) being designed to occlude an orifice (26) which communicates firstly with the cavity (22), and secondly with the discharge channel (24).

5. Moulding device (10) according to any one of the preceding claims, comprising two parts which are respectively fixed (18) and mobile (20), which can be displaced relative to one another, between an open position and a closed position of the moulding device (10), the mobile part (20) comprising the gas discharge means (24, 28).

6. Method for production of an element made of plastic material by injection moulding into a moulding device (10) according to claim 5, **characterised in that** it comprises the following steps:
- the device (10) is closed;
- plastic material (38) is injected into the moulding cavity (22);
- the gas contained in the cavity (22) is pumped via a plurality of gas discharge channels (24) which open into the cavity (22);
- each gas discharge channel (24) is closed independently from the other channels, before the passage of the plastic material (38) in front of each discharge channel (24).

7. Method according to the preceding claim, comprising the following steps, with the device closed:
- once the injection of plastic material (38) into the cavity (22) has ended, at least one gas discharge channel (24) is opened; and
- a gas is introduced into the cavity (22) via each open gas discharge channel (24).

8. Method according to claim 6 or 7, additionally comprising the following steps:
- the device (10) is opened;
- if the gas discharge channels (24) are not already open, the channels (24) are opened; and
- a pressurised gas is introduced into the channels (24) such that the plastic element is ejected.
